# EUROPEAN PATENT SPECIFICATION

(11) **EP 4 206 142 B1**
(45) Date of publication and mention of the grant of the patent: **11.03.2026**
(21) Application number: 22847847.5
(22) Date of filing: 18.03.2022
(51) Int. Cl.: C01G 53/50, H01M 4/505, H01M 4/525, H01M 10/0525, H01M 10/052

(54) **LAYERED POSITIVE ELECTRODE MATERIAL, AND PREPARATION METHOD THEREFOR AND USE THEREOF**
GESCHICHTETES POSITIVELEKTRODENMATERIAL UND HERSTELLUNGSVERFAHREN DAFÜR UND VERWENDUNG DAVON
MATÉRIAU D'ÉLECTRODE POSITIVE EN COUCHES, SON PROCÉDÉ DE PRÉPARATION ET SON UTILISATION

(30) Priority: 30.07.2021 CN 202110875613
(43) Date of publication of application: 05.07.2023
(73) Proprietor: SVOLT ENERGY TECHNOLOGY CO., LTD, Changzhou, Jiangsu 213200 (CN)
(72) Inventor: BAI, Yan, hangzhou, Jiangsu 213200 (CN); ZHANG, Shutao, hangzhou, Jiangsu 213200 (CN); WANG, Zhuang, hangzhou, Jiangsu 213200 (CN); PAN, Hailong, hangzhou, Jiangsu 213200 (CN); WANG, Yazhou, hangzhou, Jiangsu 213200 (CN)
(74) Representative: Michalski Hüttermann & Partner Patentanwälte mbB
(86) International application number: PCT/CN2022/081681
(87) International publication number: WO 2023/005227

(56) References cited:
- CN-A- 105 958 062
- CN-A- 106 328 921
- CN-A- 106 848 470
- CN-A- 111 916 724
- CN-A- 112 366 296
- CN-A- 113 582 254
- KR-A- 20200 056 235
- US-A1- 2007 202 405
- SUSAI FRANCIS AMALRAJ ET AL: "Stabilized Behavior of LiNi0.5Co0.10Mn0.05O2 Cathode Materials Induced by Their Treatment with SO2", ACS APPLIED ENERGY MATERIALS, vol. 3, no. 4, 17 March 2020 (2020-03-17), pages 3609 - 3618, XP093210687, ISSN: 2574-0962, DOI: 10.1021/acsaem.0c00098

## Description

### TECHNICAL FIELD

The present invention relates to the field of lithium-ion batteries, in particular to a preparation method of a layered positive electrode material.

### BACKGROUND

Lithium-ion batteries are widely used in electric vehicles, hybrid vehicles and energy storage systems because of their high capacity and high energy density. As one of the core components of lithium-ion batteries, positive electrode materials have a great influence on the performance of lithium-ion batteries.

Layered positive electrode materials have the advantages of high capacity and low price, and are being used in electric vehicles. However, layered positive electrode materials have the problems of high surface residual alkali (LiOH and Li₂CO₃) and high pH value, which make positive electrode materials gel during homogenization, hindering their industrial application. At present, the most commonly used method to reduce residual alkali is to wash the positive electrode material and then dry the positive electrode material, which has complicated process and long production period. The process of washing not only causes lithium loss, but also pollutes water resources.

Susai Francis Amalraj et al. (2020) ACS Applied Energy Materials, vol. 3, no. 4, pages 3609-3618 published Stabilized Behavior of LiNi0.85Co0.10Mn0.05O2 Cathode Materials Induced by Their Treatment with SO2. However, the effect of SO₂ treatment on reducing the residual alkali and pH value on the surface of the positive electrode material is undisclosed.

Therefore, new processes need to be explored to simplify the process, decrease lithium loss, reduce surface residual alkali and enhance the conductivity of the material.

### SUMMARY

The present invention provides a preparation method of a layered positive electrode material, and the preparation method includes the following steps:
(1) mixing layered nickel-cobalt-manganese hydroxide with a lithium source, performing a primary sintering in an oxygen atmosphere, crushing and screening to obtain a primary sintered product;
(2) performing a secondary sintering on the primary sintered product in step (1) in a sulfur dioxide gas to obtain the layered positive electrode material;

wherein, a chemical formula of the layered nickel-cobalt-manganese hydroxide is NiₐCo_{b}Mn_{c}(OH)₂, wherein 0.3≤a≤0.95, 0.03≤b≤0.12, 0.01≤c≤0.10, a+b+c=1;
wherein in step (2), a flow rate of the sulfur dioxide gas is 5-15 L/min;
wherein in step (2), a heating rate of the secondary sintering is 2-5°C/min;
wherein in step (2), a temperature of the secondary sintering is 300-600°C, and a time of the secondary sintering is 5-8 h.

For example, in the NiₐCo_{b}Mn_{c}(OH)₂, a may be 0.3, 0.4, 0.5, 0.6, 0.7, 0.8, 0.9 or 0.95, etc.; b may be 0.03, 0.04, 0.05, 0.06, 0.07, 0.08, 0.09, 0.10, 0.11 or 0.12, etc.; c may be 0.01, 0.02, 0.03, 0.04, 0.05, 0.06, 0.07, 0.08, 0.09 or 0.10, etc.

After the primary sintering in the oxygen atmosphere, the sintered material is crushed and screened, and then the secondary sintering is further performed in the sulfur dioxide gas to make full contact and reaction between sulfur dioxide and the primary sintered product, and sulfur dioxide reacts with the residual alkali on the surface of the positive electrode material to produce lithium sulfate, which achieves a purpose of reducing the residual alkali and pH value on the surface of the layered positive electrode material, and at the same time, it is beneficial to improving the processability of the layered positive electrode material, improving the conductivity of the layered positive electrode material and effectively enhancing the electrochemical performance of the battery.

Without crushing and screening after the primary sintering, products after the primary sintering will be agglomerated, which is not conducive to the subsequent full contact and reaction of sulfur dioxide and materials, and it is difficult to achieve the purpose of reducing the residual alkali on the surface of positive electrode materials.

In the secondary sintering if the sintering is continue in the oxygen atmosphere instead of in the sulfur dioxide gas, it will not conducive to reducing the residual alkali, and the purpose of introducing sulfur dioxide is to utilize sulfur dioxide to react with the residual alkali on the surface of the positive electrode material.

Compared with a method of removing residual alkali by water washing, a preparation method according to the present invention has the advantages of reducing the residual alkali on the surface of the positive electrode material without losing the capacity of the positive electrode material at the same time (a part of lithium in the positive electrode material will be washed away during the water washing process, which will reduce the capacity of the positive electrode material).

In one embodiment, a molar ratio of the layered nickel-cobalt-manganese hydroxide to lithium in the lithium source in step (1) is 1:(1.02-1.09), such as 1:1.02, 1:1.03, 1:1.04, 1:1.05, 1:1.06, 1:1.07, 1:1.08 or 1:1.09,etc.

In one embodiment, the lithium source includes lithium hydroxide and/or lithium carbonate.

In one embodiment, a flow rate of oxygen in step (1) is 3-10 L/min, such as 3 L/min, 4 L/min, 5 L/min, 6 L/min, 7 L/min, 8 L/min, 9 L/min or 10 L/min, etc.

In one embodiment, a temperature of the primary sintering in step (1) is 850-950°C, such as 850°C, 860°C, 870°C, 880°C, 890°C, 900°C, 910°C, 920°C, 930°C, 940°C or 950°C, etc.

In one embodiment, a time of the primary sintering in step (1) is 10-18 h, such as 10 h, 11 h, 12 h, 13 h, 14 h, 15 h, 16 h, 17 h or 18 h, etc.

In one embodiment, a flow rate of the sulfur dioxide gas in step (2) may be 5 L/min, 6 L/min, 7 L/min, 8 L/min, 9 L/min, 10 L/min, 11 L/min, 12 L/min, 13 L/min, 14 L/min or 15 L/min, etc. In one embodiment, a heating rate of the secondary sintering in step (2) may be 2°C/min, 3°C/min, 4°C/min or 5°C/min, etc.

In one embodiment, a temperature of the secondary sintering in step (2) may be 300°C, 350°C, 400°C, 450°C, 500°C, 550°C or 600°C, etc.

In one embodiment, a time of the secondary sintering in step (2) may be 5 h, 6 h, 7 h or 8 h, etc. In one embodiment, the preparation method includes the following steps:
(1) mixing a layered nickel-cobalt-manganese hydroxide with a lithium source in a molar ratio of 1:(1.02-1.09), introducing oxygen with a flow rate of 3-10 L/min, performing a primary sintering for 10-18h at a temperature of 850-950°C in an oxygen atmosphere, crushing and screening to obtain a primary sintered product;
(2) heating the primary sintered product in step (1) to 300-600°C at a heating rate of 2-5°C/min in a sulfur dioxide gas for a secondary sintering for 5-8 h to obtain the layered positive electrode material, wherein a flow rate of the sulfur dioxide gas is 5-15 L/min;
wherein a chemical formula of the layered nickel-cobalt-manganese hydroxide is NiₐCo_{b}Mn_{c}(OH)₂, wherein 0.3≤a≤0.95, 0.03≤b≤0.12, 0.01≤c≤0.10, a+b+c=1.

In one embodiment, the present disclosure provides a layered positive electrode material, which is prepared by the preparation method of the layered positive electrode material in the first aspect;
wherein, a chemical formula of the layered positive electrode material is Liₓ(NiₐCo_{b}Mn_{c})O₂, wherein 1.00≤X≤1.12, 0.3≤a≤0.95, 0.03≤b≤0.12, 0.01≤c≤0.10, a+b+c=1.

The positive electrode material obtained by the method of the present invention has low residual alkali content, strong conductivity and improved electrochemical performance.

Disclosed hereby is also a lithium-ion battery, which includes said layered positive electrode material.

### DETAILED DESCRIPTION

The present invention provides a method for preparing a layered positive electrode material, which includes the following steps:
(1) a layered nickel-cobalt-manganese hydroxide is mixed with a lithium source, a primary sintering is performed in an oxygen atmosphere, crushed and screened to obtain a primary sintered product;
(2) a secondary sintering is performed on the primary sintered product in step (1) in a sulfur dioxide gas to obtain the layered positive electrode material;
wherein, a chemical formula of the layered nickel-cobalt-manganese hydroxide is NiₐCo_{b}Mn_{c}(OH)₂, wherein 0.3≤a≤0.95, 0.03≤b≤0.12, 0.01≤c≤0.10, a+b+c=1.

For example, in the NiₐCo_{b}Mn_{c}(OH)₂, a may be 0.3, 0.4, 0.5, 0.6, 0.7, 0.8, 0.9 or 0.95, etc.; b may be 0.03, 0.04, 0.05, 0.06, 0.07, 0.08, 0.09, 0.10, 0.11 or 0.12, etc.; c may be 0.01, 0.02, 0.03, 0.04, 0.05, 0.06, 0.07, 0.08, 0.09 or 0.10, etc.

After the primary sintering in the oxygen atmosphere, the sintered material is crushed and screened, and then the secondary sintering is further performed in the sulfur dioxide gas to make full contact and reaction between sulfur dioxide and the primary sintered product, and sulfur dioxide reacts with the residual alkali on the surface of the positive electrode material to produce lithium sulfate, which achieves a purpose of reducing the residual alkali and pH value on the surface of the layered positive electrode material, and at the same time, it is beneficial to improving the processability of the layered positive electrode material, improving the conductivity of the layered positive electrode material and effectively enhancing the electrochemical performance of the battery.

In one embodiment, a molar ratio of the layered nickel-cobalt-manganese hydroxide to lithium in the lithium source in step (1) is 1:(1.02-1.09), such as 1:1.02, 1:1.03, 1:1.04, 1:1.05, 1:1.06, 1:1.07, 1:1.08 or 1:1.09, etc.

In one embodiment, the lithium source includes lithium hydroxide and/or lithium carbonate.

In one embodiment, a flow rate of oxygen in step (1) is 3-10 L/min, such as 3 L/min, 4 L/min, 5 L/min, 6 L/min, 7 L/min, 8 L/min, 9 L/min or 10 L/min, etc.

In one embodiment, a temperature of the primary sintering in step (1) is 850-950°C, such as 850°C, 860°C, 870°C, 880°C, 890°C, 900°C, 910°C, 920°C, 930°C, 940°C or 950°C, etc.

If the temperature of the primary sintering in step (1) is too low, the reaction between the layered nickel-cobalt-manganese hydroxide and the lithium source will be unfavorable, so that the reaction will be insufficient and the synthesized product will have poor performance and even cannot be used in batteries. If the temperature of the primary sintering is too high, particles of the synthesized product will be larger, which is not conducive to the deintercalation of lithium ions and the capacity will be low.

In one embodiment, a time of the primary sintering in step (1) is 10-18 h, such as 10 h, 11 h, 12 h, 13 h, 14 h, 15 h, 16 h, 17 h or 18 h, etc.

In one embodiment, a flow rate of the sulfur dioxide gas in step (2) is 5-15 L/min, such as 5 L /min, 6 L/min, 7 L/min, 8 L/min, 9 L/min, 10 L/min, 11 L/min, 12 L/min, 13 L/min, 14 L/min and 15 L/min, etc.

In one embodiment, a heating rate of the secondary sintering in step (2) is 2-5°C/min, such as 2°C/min, 3°C/min, 4°C/min or 5°C/min, etc.

In a process of the secondary sintering in step (2), too fast a heating rate will result in insufficient reaction between the layered nickel-cobalt-manganese hydroxide and the lithium source, while too slow a heating rate will increase production cost.

In one embodiment, a temperature of the secondary sintering in step (2) is 300-600°C, such as 300°C, 350°C, 400°C, 450°C, 500°C, 550°C or 600°C, etc.

If the temperature of the secondary sintering in step (2) is too high, it will lead to the growth of the particles of the positive electrode material, which is not conducive to the deintercalation of lithium ions and reduces the capacity of the positive electrode material. If the temperature is too low, it is difficult to realize the reaction between sulfur dioxide and residual alkali, and the purpose of reducing residual alkali cannot be achieved.

In one embodiment, a time of the secondary sintering in step (2) is 5-8 h, such as 5 h, 6 h, 7 h or 8 h, etc.

In one embodiment, the preparation method includes the following steps:
(1) a layered nickel-cobalt-manganese hydroxide is mixed with a lithium source in a molar ratio of 1:(1.02-1.09), oxygen is introduced with a flow rate of 3-10 L/min, and a primary sintering is performed for 10-18 h at a temperature of 850-950°C in an oxygen atmosphere, and crushed and screened to obtain a primary sintered product;
(2) the primary sintered product in step (1) is heated to 300-600°C at a heating rate of 2-5 °C/min in a sulfur dioxide gas for a secondary sintering for 5-8 h to obtain the layered positive electrode material, wherein a flow rate of the sulfur dioxide gas is 5-15 L/min;
wherein, a chemical formula of the layered nickel-cobalt-manganese hydroxide is NiₐCo_{b}Mn_{c}(OH)₂, wherein 0.3≤a≤0.95, 0.03≤b≤0.12, 0.01≤c≤0.10, a+b+c=1.

Disclosed hereby is a layered positive electrode material, which is prepared by the preparation method of the layered positive electrode material of the invention;
wherein, a chemical formula of the layered positive electrode material is Liₓ(NiₐCo_{b}Mn_{c})O₂, wherein 1.00≤X≤1.12, 0.3≤a≤0.95, 0.03≤b≤0.12, 0.01≤c≤0.10, a+b+c=1.

Disclosed hereby is also a lithium-ion battery, which includes said layered positive electrode material.

### Example 1

This example provides a layered positive electrode material, and a chemical formula of the layered positive electrode material is Li_{1.05}(Ni_{0.88}Co_{0.09}Mn_{0.03})O₂.

A preparation method of the layered positive electrode material is as follows:
(1) a layered nickel-cobalt-manganese hydroxide Ni_{0.88}Co_{0.09}Mn_{0.03}(OH)₂ was uniformly mixed with lithium hydroxide in a molar ratio of 1:1.05, a primary sintering was performed at 900°C for 12 h in an oxygen atmosphere of 5 L/min, cooled to room temperature, ground, crushed and screened to obtain a primary sintered product;
(2) the primary sintered product in step (1) was put into a sagger and placed in an experimental furnace, then sulfur dioxide gas with a flow rate of 10 L/min was introduced into the experimental furnace, and heated to 400°C at a heating rate of 4 °C/min for a secondary sintering for 6 h to obtain the layered positive electrode material.

### Example 2

This example differs from Example 1 in that a temperature of the primary sintering was 850°C in step (1).

The other preparation methods and parameters are the same as in Example 1.

### Example 3

This example provides a layered positive electrode material, and a chemical formula of the layered positive electrode material is Li_{1.02}(Ni_{0.5}Co_{0.2}Mn_{0.3})O₂.

A preparation method of the layered positive electrode material is as follows:
(1) a layered nickel-cobalt-manganese hydroxide Ni_{0.5}Co_{0.2}Mn_{0.3}(OH)₂ was uniformly mixed with lithium hydroxide in a molar ratio of 1:1.02, a primary sintering was performed at 850°C for 18 h in an oxygen atmosphere of 3 L/min, cooled to room temperature, ground, crushed and screened to obtain a primary sintered product;
(2) the primary sintered product in step (1) was put into a sagger and placed in an experimental furnace, then sulfur dioxide gas with a flow rate of 5 L/min was introduced into the experimental furnace, and heated to 300°C at a heating rate of 3 °C/min for a secondary sintering for 8 h to obtain the layered positive electrode material.

### Comparative Example 4

This comparative example provides a layered positive electrode material, and a chemical formula of the layered positive electrode material is Li_{1.09}(Ni_{1/3}Co_{1/3}Mn_{1/3})O₂.

A preparation method of the layered positive electrode material is as follows:
(1) a layered nickel-cobalt-manganese hydroxide Ni_{1/3}Co_{1/3}Mn_{1/3}(OH)₂ was uniformly mixed with lithium hydroxide in a molar ratio of 1:1.09, a primary sintering was performed at 950°C for 10 h in an oxygen atmosphere of 10 L/min, cooled to room temperature, ground, crushed and screened to obtain a primary sintered product;
(2) the primary sintered product in step (1) was put into a sagger and placed in an experimental furnace, then sulfur dioxide gas with a flow rate of 15 L/min was introduced into the experimental furnace, and heated to 600°C at a heating rate of 5 °C/min for a secondary sintering for 5 h to obtain the layered positive electrode material.

### Comparative Example 5

This comparative example differs from Example 1 in that a flow rate of sulfur dioxide gas was 3 L/min in step (2).

The other preparation methods and parameters are the same as in Example 1.

### Comparative Example 6

This comparative example differs from Example 1 in that a temperature of the secondary sintering was 250°C in step (2).

The other preparation methods and parameters are the same as in Example 1.

### Comparative Example 1

This comparative example differs from Example 1 in that step (2) is not performed but only step (1) is performed.

The other preparation methods and parameters are the same as in Example 1.

### Comparative Example 2

This comparative example differs from Example 1 in that the primary sintered product was not ground, crushed and screened in step (1).

The other preparation methods and parameters are the same as in Example 1.

### Comparative Example 3

This comparative example differs from Example 1 in that a sulfur dioxide gas was replaced by an oxygen atmosphere in step (2).

The other preparation methods and parameters are the same as in Example 1.

The layered positive electrode materials provided by Examples 1-3, Comparative Examples 4-6 and Comparative Examples 1-3 were tested, including the content of lithium hydroxide and lithium carbonate, the content of residual alkali and pH value (lithium carbonate was produced by reacting carbon dioxide in air with residual lithium on the surface of the positive electrode material). The results are shown in Table 1.

**Table 1**

| | LiOH(%) | Li₂CO₃(%) | Total residual alkali (%) | pH |
|---|---|---|---|---|
| Example 1 | 0.37 | 0.25 | 0.45 | 11.05 |
| Example 2 | 0.29 | 0.13 | 0.41 | 11.03 |
| Example 3 | 0.26 | 0.16 | 0.42 | 11.04 |
| Comparative Example 4 | 0.28 | 0.18 | 0.46 | 11.06 |
| Comparative Example 5 | 0.45 | 0.30 | 0.75 | 11.21 |
| Comparative Example 6 | 0.47 | 0.35 | 0.82 | 11.45 |
| Comparative Example 1 | 1.41 | 0.87 | 2.28 | 13.05 |
| Comparative Example2 | 1.40 | 0.79 | 2.19 | 13.03 |
| Comparative Example 3 | 1.40 | 0.88 | 2.28 | 13.04 |

As can be seen from Table 1, the data results from Examples 1-3 and Comparative Examples 4-6 show that the total residual alkali content of the positive electrode material is less than or equal to 0.82%, and the pH value is less than or equal to 11.45. After further adjusting the flow rate of sulfur dioxide and the temperature of the secondary sintering (Examples 1-3 and Comparative Example 4), the total residual alkali content of the positive electrode material is less than or equal to 0.46%, and the pH value is less than or equal to 11.06.

It can be seen from the comparison of the data results of Example 1 and Comparative Example 5 that when the flow rate of sulfur dioxide is too slow, the reaction between sulfur dioxide and residual alkali on the surface of the positive electrode material is unfavorable, and the purpose of reducing residual alkali is not achieved.

It can be seen from the comparison of the data results of Example 1 and Comparative Example 6 that when the temperature of the secondary sintering is too low, the reaction of sulfur dioxide with the positive electrode material is insufficient

It can be seen from the comparison of the data results of Example 1 and Comparative Example 1 that the residual alkali and pH on the surface of the layered positive electrode materials are obviously reduced after introducing sulfur dioxide.

It can be seen from the comparison of the data results of Example 1 and Comparative Example 2 that without crushing and screening the product after the primary sintering, the contact reaction between sulfur dioxide and the residual alkali on the surface of the positive electrode material is unfavorable, and the reduction of the residual alkali is unfavorable.

It can be seen from the comparison of the data results of Example 1 and Comparative Example 3 that the reduction of residual alkali on the surface of the positive electrode material cannot be achieved by replacing sulfur dioxide with oxygen.

The layered positive electrode materials provided in Examples 1-3, Comparative Examples 4-6 and Comparative Examples 1-3 are prepared into batteries, and a preparation process is as follows.

The preparation of button battery used the lithium nickel manganate positive electrode materials prepared in examples and comparative examples, respectively. The positive electrode material, a carbon black conductive agent and a binder PVDF (a solid content of 6.25%) were weighed in a weight ratio of 92:4:4, and NMP was added to adjust a solid content of a slurry to 49%, and mixed uniformly to obtain a positive electrode slurry. The positive electrode slurries prepared above were coated on an aluminum foil with a thickness of 20 µm, vacuum dried and rolled to prepare positive electrode sheets. The positive electrode sheet was used as a positive electrode, a lithium metal sheet was used as a negative electrode sheet, and an electrolyte containing 1 mol/L LiPF₆/EC:DMC (a volume ratio of 2:3) was used to assemble a button battery.

The batteries provided in Examples 1-3, Comparative Examples 4-6 and Comparative Examples 1-3 are subjected to electrochemical performance tests under the following test conditions.
the electrical performance of the materials were tested at 25°C using Blue Electric Battery Test System with a voltage range of 3.0-4.3 V; an initial discharge capacity, an initial discharge efficiency and a capacity retention rate after 50 cycles were tested.

The results are shown in Table 2

**Table 2**

| | 0.1C discharge capacity (mAh/g) | Initial efficiency (%) | Retention rate after cycle (%) |
|---|---|---|---|
| Example 1 | 214.0 | 90.88 | 99.95 |
| Example 2 | 212.7 | 90.24 | 98.42 |
| Example 3 | 211.8 | 90.25 | 98.03 |
| Comparative Example 4 | 213.4 | 90.58 | 97.79 |
| Comparative Example 5 | 209.1 | 89.87 | 88.98 |
| Comparative Example 6 | 208.5 | 88.56 | 89.69 |
| Comparative Example 1 | 188.7 | 85.1 | 88.71 |
| Comparative Example 2 | 189.5 | 86.2 | 88.69 |
| Comparative Example 3 | 186.2 | 84.6 | 87.59 |

As can be seen from Table 2, the data results from Examples 1-3 and Comparative Examples 4-6 show that the button battery assembled with the positive electrode material can have a discharge capacity of more than or equal to 208.5 mAh/g at 0.1 C, an initial efficiency of more than or equal to 88.56%, and a capacity retention rate after 50 cycles of more than or equal to 88.98%. After further adjusting a rate of sulfur dioxide and a temperature of the secondary sintering (Examples 1-3 and Comparative Example 4), the discharge capacity of the battery can have a discharge capacity of more than or equal to 211.8 mAh/g at 0.1 C, an initial efficiency of more than or equal to 90.24%, and a capacity retention rate after 50 cycles of more than or equal to 97.79%.

It can be seen from the comparison of the data results of Example 1 and Comparative Example 5 that when the flow rate of sulfur dioxide is too slow, the reduction of residual alkali is unfavorable, and the electrochemical performance of the positive electrode material is affected.

It can be seen from the comparison of the data results of Example 1 and Comparative Example 6 that when the temperature of the secondary sintering is too low, the reaction of sulfur dioxide with the positive electrode material is insufficient, which will also affect the electrochemical performance of the positive electrode material.

It can be seen from the comparison of the data results of Example 1 and Comparative Example 1 that the residual alkali and pH on the surface of layered positive electrode materials are obviously reduced after introducing sulfur dioxide.

It can be seen from the comparison of the data results of Example 1 and Comparative Example 2 that without crushing and screening the product after the primary sintering, sulfur dioxide is not conducive to reacting with the residual alkali on the surface of the positive electrode material, resulting in a decrease of the electrochemical performance of the positive electrode material.

It can be seen from the comparison of the data results of Example 1 and Comparative Example 3 that the purpose of reducing the residual alkali and reducing the residual alkali of the positive electrode material cannot be achieved by replacing sulfur dioxide with oxygen.

## Claims

1. A preparation method of a layered positive electrode material, comprising the following steps:
(1) mixing a layered nickel-cobalt-manganese hydroxide with a lithium source, performing a primary sintering in an oxygen atmosphere, crushing and screening to obtain a primary sintered product;
(2) performing a secondary sintering on the primary sintered product in step (1) in a sulfur dioxide gas to obtain the layered positive electrode material;
wherein, a chemical formula of the layered nickel-cobalt-manganese hydroxide is NiₐCo_{b}Mn_{c}(OH)₂, wherein 0.3≤a≤0.95, 0.03≤b≤0.12, 0.01≤c≤0.10, a+b+c=1;
wherein in step (2), a flow rate of the sulfur dioxide gas is 5-15 L/min;
wherein in step (2), a heating rate of the secondary sintering is 2-5°C/min;
wherein in step (2), a temperature of the secondary sintering is 300-600°C, and a time of the secondary sintering is 5-8 h.

2. The preparation method of a layered positive electrode material according to claim 1, wherein in step (1), a molar ratio of the layered nickel-cobalt-manganese hydroxide to lithium in the lithium source is 1:(1.02-1.09), and the lithium source comprises lithium hydroxide and/or lithium carbonate.

3. The preparation method of a layered positive electrode material according to claim 1 or 2, wherein in step (1), a flow rate of oxygen is 3-10 L/min.

4. The preparation method of a layered positive electrode material according to any one of claims 1 to 3, wherein in step (1), a temperature of the primary sintering is 850-950°C, and a time of the primary sintering is 10-18 h.

5. The preparation method of a layered positive electrode material according to any one of claims 1 to 4, wherein the preparation method comprises the following steps:
(1) mixing a layered nickel-cobalt-manganese hydroxide with a lithium source in a molar ratio of 1:(1.02-1.09), introducing oxygen with a flow rate of 3-10 L/min, performing a primary sintering for 10-18h at a temperature of 850-950°C in an oxygen atmosphere, crushing and screening to obtain a primary sintered product;
(2) heating the primary sintered product in step (1) to 300-600°C at a heating rate of 2-5°C/min in a sulfur dioxide gas for a secondary sintering for 5-8 h to obtain the layered positive electrode material, wherein a flow rate of the sulfur dioxide gas is 5-15 L/min;
wherein, a chemical formula of the layered nickel-cobalt-manganese hydroxide is NiₐCo_{b}Mn_{c}(OH)₂, wherein 0.3≤a≤0.95, 0.03≤b≤0.12, 0.01≤c≤0.10, a+b+c=1.

## Patentansprüche

1. Herstellungsverfahren für ein geschichtetes Positivelektrodenmaterial, umfassend die folgenden Schritte:
(1) Mischen eines geschichteten Nickel-Kobalt-Mangan-Hydroxids mit einer Lithiumquelle, Durchführen eines primären Sinterns in einer Sauerstoffatmosphäre, Zerkleinern und Sieben, um ein primäres gesintertes Produkt zu erhalten;
(2) Durchführen eines sekundären Sinterns an dem primären gesinterten Produkt in Schritt (1) in einem Schwefeldioxidgas, um das geschichtete Positivelektrodenmaterial zu erhalten;
wobei eine chemische Formel des geschichteten Nickel-Kobalt-Mangan-Hydroxids NiₐCo_{b}Mn_{c}(OH)₂ ist, wobei 0,3≤a≤0,95, 0,03≤b≤0,12, 0,01≤c≤0,10, a+b+c=1;
wobei in Schritt (2) eine Durchflussrate des Schwefeldioxidgases 5-15 L/min beträgt;
wobei in Schritt (2) eine Erwärmungsrate des sekundären Sinterns 2-5 °C/min beträgt;
wobei in Schritt (2) eine Temperatur des sekundären Sinterns 300-600 °C beträgt und eine Zeit des sekundären Sinterns 5-8 h beträgt.

2. Herstellungsverfahren für ein geschichtetes Positivelektrodenmaterial nach Anspruch 1, wobei in Schritt (1) ein Molverhältnis des geschichteten Nickel-Kobalt-Mangan-Hydroxids zu Lithium in der Lithiumquelle 1:(1,02-1,09) beträgt und die Lithiumquelle Lithiumhydroxid und/oder Lithiumcarbonat umfasst.

3. Herstellungsverfahren für ein geschichtetes Positivelektrodenmaterial nach Anspruch 1 oder 2, wobei in Schritt (1) eine Durchflussrate von Sauerstoff 3-10 L/min beträgt.

4. Herstellungsverfahren für ein geschichtetes Positivelektrodenmaterial nach einem der Ansprüche 1 bis 3, wobei in Schritt (1) eine Temperatur des primären Sinterns 850-950 °C beträgt und eine Zeit des primären Sinterns 10-18 h beträgt.

5. Herstellungsverfahren für ein geschichtetes Positivelektrodenmaterial nach einem der Ansprüche 1 bis 4, wobei das Herstellungsverfahren die folgenden Schritte umfasst:
(1) Mischen eines geschichteten Nickel-Kobalt-Mangan-Hydroxids mit einer Lithiumquelle in einem Molverhältnis von 1:(1,02-1,09), Einführen von Sauerstoff mit einer Durchflussrate von 3-10 L/min, Durchführen eines primären Sinterns für 10-18 h bei einer Temperatur von 850-950 °C in einer Sauerstoffatmosphäre, Zerkleinern und Sieben, um ein primäres gesintertes Produkt zu erhalten;
(2) Erwärmen des primären gesinterten Produkts in Schritt (1) auf 300-600 °C mit einer Erwärmungsrate von 2-5 °C/min in einem Schwefeldioxidgas für ein sekundäres Sintern für 5-8 h, um das geschichtete Positivelektrodenmaterial zu erhalten, wobei eine Durchflussrate des Schwefeldioxidgases 5-15 L/min beträgt;
wobei eine chemische Formel des geschichteten Nickel-Kobalt-Mangan-Hydroxids NiₐCo_{b}Mnc(OH)₂ ist, wobei 0,3≤a≤0,95, 0,03≤b≤0,12, 0,01≤c≤0,10, a+b+c=1.

## Revendications

1. Procédé de préparation d'un matériau d'électrode positive en couches, comprenant les étapes suivantes :
(1) le mélange d'un hydroxyde de nickel-cobalt-manganèse en couches avec une source de lithium, la réalisation d'un frittage primaire dans une atmosphère d'oxygène, le broyage et le criblage pour obtenir un produit fritté primaire ;
(2) la réalisation d'un frittage secondaire sur le produit fritté primaire à l'étape (1) dans un gaz de dioxyde de soufre pour obtenir le matériau d'électrode positive en couches ;
dans lequel, une formule chimique de l'hydroxyde de nickel-cobalt-manganèse en couches est NiₐCo_{b}Mn_{c}(OH)₂, dans lequel 0,3≤a≤0,95, 0,03≤b≤0,12, 0,01≤c≤0,10, a+b+c=1 ;
dans lequel, à l'étape (2), un débit de gaz dioxyde de soufre est de 5 à 15 L/min ;
dans lequel, à l'étape (2), une vitesse de chauffage du frittage secondaire est de 2 à 5 °C/min ;
dans lequel, à l'étape (2), une température du frittage secondaire est de 300 à 600 °C, et une durée du frittage secondaire est de 5 à 8 h.

2. Procédé de préparation d'un matériau d'électrode positive en couches selon la revendication 1, dans lequel à l'étape (1), un rapport molaire de l'hydroxyde de nickel-cobalt-manganèse en couches au lithium dans la source de lithium est de 1 :(1,02-1,09), et la source de lithium comprend de l'hydroxyde de lithium et/ou du carbonate de lithium.

3. Procédé de préparation d'un matériau d'électrode positive en couches selon la revendication 1 ou 2, dans lequel, à l'étape (1), un débit d'oxygène est de 3 à 10 L/min.

4. Procédé de préparation d'un matériau d'électrode positive en couches selon l'une quelconque des revendications 1 à 3, dans lequel, à l'étape (1), une température du frittage primaire est de 850 à 950 °C, et une durée du frittage primaire est de 10 à 18 h.

5. Procédé de préparation d'un matériau d'électrode positive en couches selon l'une quelconque des revendications 1 à 4, dans lequel le procédé de préparation comprend les étapes suivantes :
(1) le mélange d'un hydroxyde de nickel-cobalt-manganèse en couches avec une source de lithium dans un rapport molaire de 1 :(1,02-1,09), l'introduction d'oxygène avec un débit de 3 à 10 L/min, la réalisation d'un frittage primaire pendant 10 à 18 h à une température de 850 à 950 °C dans une atmosphère d'oxygène, le broyage et le criblage pour obtenir un produit fritté primaire ;
(2) le chauffage du produit fritté primaire à l'étape (1) à 300 à 600 °C à une vitesse de chauffage de 2 à 5 °C/min dans un gaz de dioxyde de soufre pour un frittage secondaire pendant 5 à 8 h pour obtenir le matériau d'électrode positive en couches, dans lequel un débit de gaz de dioxyde de soufre est de 5 à 15 L/min ;
dans lequel, une formule chimique de l'hydroxyde de nickel-cobalt-manganèse en couches est NiₐCo_{b}Mnc(OH)₂, dans lequel 0,3≤a≤0,95, 0,03≤b≤0,12, 0,01≤c≤0,10, a+b+c=1.
